# EUROPEAN PATENT SPECIFICATION

(11) **EP 2 618 075 B1**
(45) Date of publication and mention of the grant of the patent: **06.06.2018**
(21) Application number: 11824696.6
(22) Date of filing: 28.02.2011
(51) Int. Cl.: F25B 47/02, F28F 13/00, F28D 20/00

(54) **HEAT STORAGE DEVICE AND AIR CONDITIONER PROVIDED WITH SAID HEAT STORAGE DEVICE**
WÄRMESPEICHERVORRICHTUNG UND MIT DIESER WÄRMESPEICHERVORRICHTUNG AUSGESTATTETE KLIMAANLAGE
DISPOSITIF DE STOCKAGE THERMIQUE ET CONDITIONNEUR D'AIR ÉQUIPÉ DUDIT DISPOSITIF DE STOCKAGE THERMIQUE

(30) Priority: 16.09.2010 JP 2010207495
(43) Date of publication of application: 24.07.2013
(73) Proprietor: Panasonic Corporation, Osaka 571-8501 (JP)
(72) Inventor: OKA, Kouji, Osaka-shi, Osaka 540-6207 (JP); KURISUTANI, Hiroharu, Osaka-shi, Osaka 540-6207 (JP); TOKURA, Satoshi, Osaka-shi, Osaka 540-6207 (JP); KAMODA, Hirokazu, Osaka-shi, Osaka 540-6207 (JP); BAMBA, Masahiro, Osaka-shi, Osaka 540-6207 (JP); YAMAMOTO, Noriaki, Osaka-shi, Osaka 540-6207 (JP)
(74) Representative: Eisenführ Speiser
(86) International application number: PCT/JP2011/001136
(87) International publication number: WO 2012/035676

(56) References cited:
- JP-A- 2 197 156
- JP-A- 3 160 242
- JP-U- H02 128 065

## Description

### TECHNICAL FIELD

The present invention relates to a heat storage device disposed so as to circumscribe a compressor and accommodating a heat storage material that stores therein heat generated by the compressor, and also relates to an air conditioner including the heat storage device.

### BACKGROUND ART

A conventional heat pump air conditioner of this type conducts defrosting during heating operation by switching from a heating cycle to a cooling cycle with use of a four-way valve when frost has been formed on an outdoor heat exchanger. In this defrosting method, although an indoor fan is stopped, cold air flows gradually out of an indoor unit, thus posing a problem of warmth being lost.

In view of the above, there has been proposed another air conditioner that includes a heat storage device mounted on a compressor in an outdoor unit for the purpose of defrosting by utilizing waste heat of the compressor stored in a heat storage tank during heating operation (see, for example, Patent Document 1).

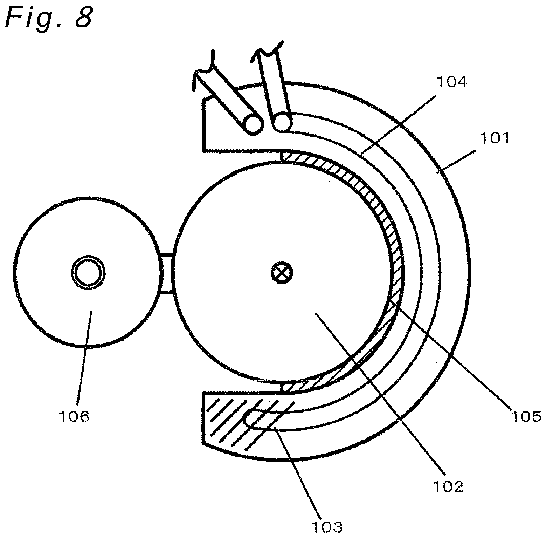

Fig. 8 is a plan view exemplifying a conventional heat storage device. In Fig. 8, a heat storage tank 101 accommodates a heat storage material 103 for storing waste heat generated by a compressor 102, and a heat storage heat exchanger 104 for exchanging heat with a refrigerant in order to effectively utilize the heat stored in the heat storage material 103. Furthermore, the heat storage tank 101 is attached so as to be in contact with the compressor 102 while a heat transfer sheet 105 is interposed therebetween.

Moreover, attached to the compressor 102 is an accumulator 106 preventing a liquid refrigerant from flowing into the compressor 102.

### PATENT DOCUMENT

Patent Document 1: JP 07-9304 B

### SUMMARY OF THE INVENTION

### PROBLEMS TO BE SOLVED BY THE INVENTION

However, in the conventional configuration described above, when the heat storage tank 101 is attached to the compressor 102 with the heat transfer sheet 105 being interposed therebetween, air is left between the heat transfer sheet 105 and the heat storage tank 101 to serve as a heat insulator and inhibit heat of the compressor 102 from being transferred to the heat storage material 103 stored in the heat storage tank 101, which deteriorates heat transfer efficiency. Another conventional solution, shown in JP03-160242, discloses the preamble of claim 1.

The present invention has been made in view of the above problems of the related art. It is an object of the present invention to provide a heat storage device in which, by discharging air between a heat transfer sheet and a heat storage tank, heat of a compressor can be transferred to a heat storage material accommodated in the heat storage tank via the heat transfer sheet with no deterioration of the heat transfer efficiency so as to efficiently store heat.

### MEANS FOR SOLVING THE PROBLEMS

In order to achieve the object mentioned above, the present invention provides a heat storage device disposed to circumscribe a compressor, the heat storage device including: a heat storage material for storing heat generated by the compressor; a heat storage tank accommodating the heat storage material; and a heat transfer sheet provided between the compressor and the heat storage tank so as to efficiently transfer waste heat of the compressor to the heat storage tank; wherein the heat storage tank is provided with a heat transfer portion at a position in contact with the heat transfer sheet, and the heat transfer portion is provided, on a surface in contact with the heat transfer sheet, with grooves used for discharging air left between the heat transfer portion and the heat transfer sheet.

In this configuration, when attaching the heat storage tank having the heat transfer portion to the compressor with the heat transfer sheet being interposed therebetween, air left between the heat transfer sheet and the heat transfer portion upon being made in close contact with each other can be discharged along the grooves for discharging air, which are provided to the heat transfer portion in the surface in contact with the heat transfer sheet. Therefore, no air is left between the heat transfer sheet and the heat transfer portion. Because no air is left between the heat transfer sheet and the heat transfer portion in this manner, heat of the compressor can be transferred to the heat storage material accommodated in the heat storage tank via the heat transfer sheet and the heat transfer portion while air serving as a heat insulator does not inhibit transfer of heat, with a result of improvement in heat transfer efficiency.

### EFFECTS OF THE INVENTION

According to the present invention, when the heat storage tank having the heat transfer portion is attached to the compressor with the heat transfer sheet being interposed therebetween, air serving as a heat insulator will not inhibit transfer of heat and heat transfer efficiency can be improved. Because heat of the compressor can be efficiently stored in the heat storage material, waste heat of the compressor can be utilized more efficiently.

### BRIEF DESCRIPTION OF THE DRAWINGS

Fig. 1 is a configuration diagram of an air conditioner including a heat storage device according to the present invention.
Fig. 2 is a pattern diagram of the air conditioner of Fig. 1, depicting operation thereof and a flow of a refrigerant during normal heating.
Fig. 3 is a pattern diagram of the air conditioner of Fig. 1, depicting operation thereof and a flow of the refrigerant during defrosting/heating.
Fig. 4 is a view of a state where a heat storage tank is attached to a compressor in the heat storage device according to the present invention.
Fig. 5 is a view of the heat storage tank provided with a heat transfer portion in the heat storage device according to the present invention.
Figs. 6(a) and 6(b) are views of the heat transfer portion in the heat storage device according to the present invention.
Fig. 7 is a view of a heat transfer sheet in the heat storage device according to the present invention.
Fig. 8 is a side view of a conventional heat storage device.

### MODES FOR CARRYING OUT THE INVENTION

A first invention relates to a heat storage device disposed to circumscribe a compressor, the heat storage device including: a heat storage material for storing heat generated by the compressor; a heat storage tank accommodating the heat storage material; and a heat transfer sheet provided between the compressor and the heat storage tank so as to efficiently transfer waste heat of the compressor to the heat storage tank; wherein the heat storage tank is provided with a heat transfer portion at a position in contact with the heat transfer sheet, and the heat transfer portion is provided, on a surface in contact with the heat transfer sheet, with grooves used for discharging air left between the heat transfer portion and the heat transfer sheet. In this configuration, when attaching the heat storage tank having the heat transfer portion to the compressor with the heat transfer sheet being interposed therebetween, air left between the heat transfer sheet and the heat transfer portion upon being made in close contact with each other can be discharged along the grooves for discharging air, which are provided to the heat transfer portion in the surface in contact with the heat transfer sheet. Therefore, no air is left between the heat transfer sheet and the heat transfer portion. Because heat of the compressor can be transferred to the heat storage material accommodated in the heat storage tank via the heat transfer sheet and the heat transfer portion while air serving as a heat insulator does not inhibit transfer of heat, so that heat transfer efficiency can be improved and heat of the compressor can be efficiently stored in the heat storage material. Waste heat of the compressor can be utilized more efficiently.

According to a second invention, on a reverse surface of the surface in contact with the heat transfer sheet, the heat transfer portion is thicker at positions corresponding to the grooves on the reverse side, rather than other positions. In this configuration, it is possible to compensate deteriorated strength due to the reduced thickness at the positions of the grooves provided in the heat transfer portion as compared with the other positions, thereby securing strength.

According to a third invention, the heat transfer sheet is provided with through holes. In this configuration, it is possible to prevent air from being left between the heat transfer sheet and the compressor, so as to improve heat transfer efficiency between the heat transfer sheet and the compressor.

According to a fourth invention, the grooves in the heat transfer portion are provided at constant pitches, and the through holes in the heat transfer sheet are provided at pitches equal to the pitches of the grooves. In this configuration, after air left between the compressor and the heat transfer sheet is discharged outside the heat transfer sheet via the through holes in the heat transfer sheet, the air thus discharged can be reliably discharged along the grooves in the heat transfer portion, which are located on the outer periphery at the same positions as the through holes.

According to a fifth invention, the heat transfer portion is thinner than portions of the heat storage tank other than the heat transfer portion. In this configuration, while securing strength of the heat storage tank other than the heat transfer portion, it is possible to improve the heat transfer property at the heat transfer portion.

According to a sixth invention, the heat transfer sheet has adhesiveness and elasticity, so as to be in close contact with the compressor as well as with the heat transfer portion and to be shrunk when the heat storage tank is pressed against the compressor. Due to such adhesiveness, the compressor and the heat transfer sheet, as well as the heat transfer sheet and the heat transfer portion can be made in close contact with each other so as to improve the heat transfer property. Furthermore, due to such elasticity, even in a case where the surface of the compressor is rough with unsmoothness or a projection formed during welding, such unevenness of the surface of the compressor can be covered to secure the adhesion property, with a result of improvement in heat transfer property.

According to a seventh invention, both the heat storage tank and the heat transfer portion are made of resin. Even in a case where the heat storage tank and the heat transfer portion are provided as separate components, they can be easily integrated together by secondary processing. Furthermore, production thereof may be made at a low cost.

According to another aspect of the present invention, an air conditioner includes a compressor and any one of the heat storage devices, which is disposed so as to circumscribe the compressor.

An embodiment of the present invention is described below with reference to the drawings. It should be noted that the present invention is not limited to this embodiment.

### (Embodiment 1)

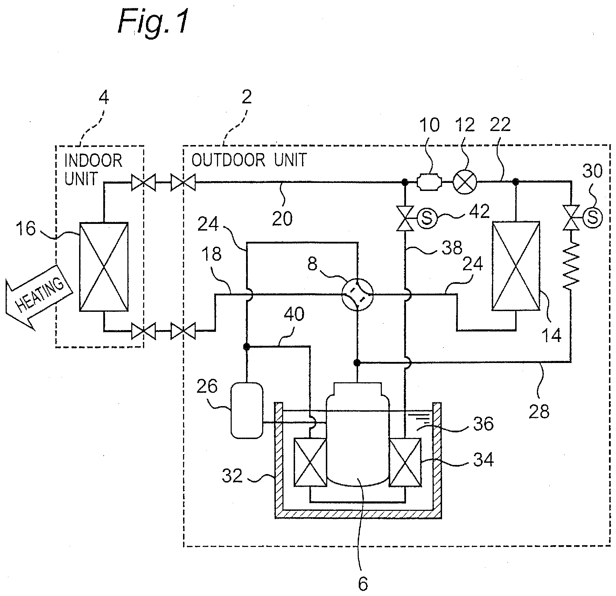

Fig. 1 depicts a configuration of an air conditioner including a heat storage device according to the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. These components are connected to each other via refrigerant piping to configure a refrigeration cycle.

More specifically, the compressor 6 and the indoor heat exchanger 16 are connected to each other via a first pipe 18 on which the four-way valve 8 is provided, and the indoor heat exchanger 16 and the expansion valve 12 are connected to each other via a second pipe 20 on which the strainer 10 is provided. Furthermore, the expansion valve 12 and the outdoor heat exchanger 14 are connected to each other via a third pipe 22, and the outdoor heat exchanger 14 and the compressor 6 are connected to each other via a fourth pipe 24.

The four-way valve 8 is located midway on the fourth pipe 24, and an accumulator 26 for separating a liquid refrigerant and a gaseous refrigerant is provided on the fourth pipe 24 on a refrigerant suction side of the compressor 6. The compressor 6 and the third pipe 22 are connected to each other via a fifth pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 used for exchanging heat with the heat storage heat exchanger 34. The heat storage tank 32, the heat storage heat exchanger 34, and the heat storage material 36 constitute the heat storage device.

Moreover, the second pipe 20 and the heat storage heat exchanger 34 are connected to each other via a sixth pipe 38, and the heat storage heat exchanger 34 and the fourth pipe 24 are connected to each other via a seventh pipe 40. A second solenoid valve 42 is provided on the sixth pipe 38.

The indoor unit 4 accommodates therein, in addition to the indoor heat exchanger 16, a ventilation fan (not shown), vertical wind direction changing blades (not shown), and horizontal wind direction changing blades (not shown). The indoor heat exchanger 16 exchanges heat between indoor air sucked into the indoor unit 4 by the ventilation fan and a refrigerant flowing through the indoor heat exchanger 16 so that air heated or cooled by heat exchange may be blown into a room during heating or cooling, respectively. As an occasion demands, the vertical wind direction changing blades vertically change the direction of air blown out of the indoor unit 4 and the horizontal wind direction changing blades horizontally change the direction of air brown out of the indoor unit 4.

The compressor 6, the ventilation fan, the vertical wind direction changing blades, the horizontal wind direction changing blades, the four-way valve 8, the expansion valve 12, the solenoid valves 30 and 42, and the like are electrically connected to and controlled by a controller (for example, a microcomputer not shown).

Connection relationships between and functions of the components in refrigeration cycle equipment thus configured according to the present invention are described below with reference to a flow of the refrigerant, exemplifying the case of heating operation.

The refrigerant discharged from a discharge port of the compressor 6 passes through the four-way valve 8 and reaches the indoor heat exchanger 16 via the first pipe 18. The refrigerant condenses in the indoor heat exchanger 16 by exchanging heat with indoor air, leaves the indoor heat exchanger 16, and passes through the second pipe 20 as well as through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third pipe 22. The refrigerant then evaporates in the outdoor heat exchanger 14 by exchanging heat with outdoor air and passes through the fourth pipe 24, the four-way valve 8, and the accumulator 26, before the refrigerant returns to a suction port of the compressor 6.

The fifth pipe 28 branched from the first pipe 18 between the discharge port of the compressor 6 and the four-way valve 8 joins the third pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed to surround and contact the compressor 6, so as to store heat generated by the compressor 6 in the heat storage material 36. The sixth pipe 38 branched from the second pipe 20 between the indoor heat exchanger 16 and the strainer 10 reaches an inlet of the heat storage heat exchanger 34 via the second solenoid valve 42, and the seventh pipe 40 extending from an outlet of the heat storage heat exchanger 34 joins the fourth pipe 24 between the four-way valve 8 and the accumulator 26.

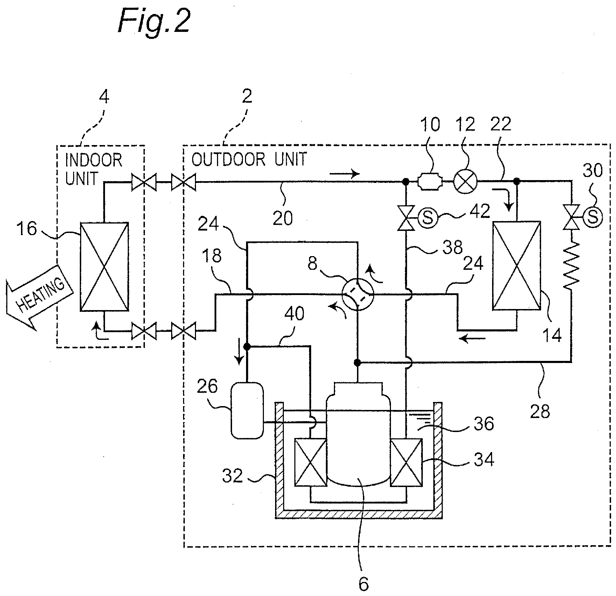

Operation of the air conditioner during normal heating is described next with reference to Fig. 2 that schematically depicts the operation of the air conditioner of Fig. 1 and a flow of the refrigerant during normal heating.

During normal heating operation, the first solenoid valve 30 and the second solenoid valve 42 are controlled to be closed. In this case, as described above, the refrigerant discharged from the discharge port of the compressor 6 passes through the four-way valve 8 and reaches the indoor heat exchanger 16 via the first pipe 18. Having condensed by exchanging heat with indoor air in the indoor heat exchanger 16, the refrigerant leaves the indoor heat exchanger 16, passes through the second pipe 20, and reaches the expansion valve 12. The refrigerant is then reduced in pressure by the expansion valve 12 and reaches the outdoor heat exchanger 14 via the third pipe 22. Having evaporated by exchanging heat with outdoor air in the outdoor heat exchanger 14, the refrigerant passes through the fourth pipe 24 as well as through the four-way valve 8 and returns to the suction port of the compressor 6.

Heat generated by the compressor 6 is transferred from an outer wall of the compressor 6 to an outer wall of the heat storage tank 32 and is stored in the heat storage material 36 accommodated in the heat storage tank 32.

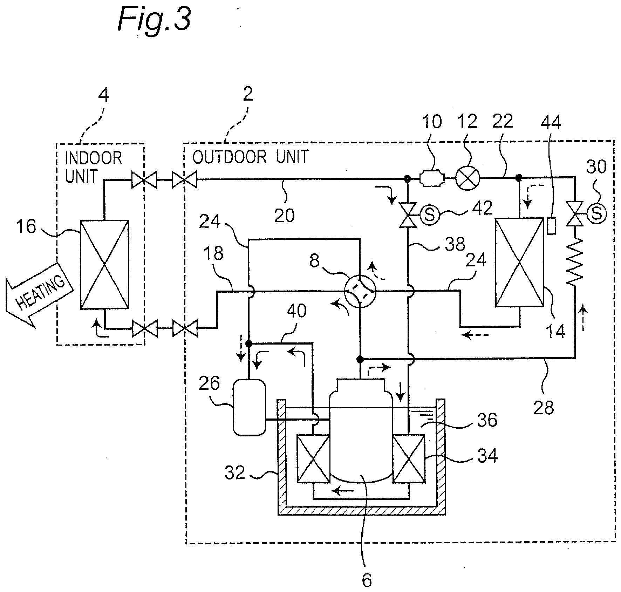

Operation of the air conditioner during defrosting/heating is described next with reference to Fig. 3 that schematically depicts the operation of the air conditioner of Fig. 1 and a flow of the refrigerant during defrosting/heating. In this figure, solid arrows indicate a flow of the refrigerant used for heating, and dotted arrows indicate a flow of the refrigerant used for defrosting.

If frost is formed and grows on the outdoor heat exchanger 14 during normal heating operation mentioned above, airflow resistance of the outdoor heat exchanger 14 increases to thereby reduce the amount of air passing therethrough, resulting in reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with the evaporating temperature in the case where no frost is formed, the controller outputs a command to shift from normal heating operation to defrosting/heating operation.

When the air conditioner is shifted from normal heating operation to defrosting/heating operation, the controller controls the first solenoid valve 30 and the second solenoid valve 42 to be opened. In this case, in addition to the flow of the refrigerant during normal heating operation as described above, part of a gaseous refrigerant discharged from the discharge port of the compressor 6 passes through the fifth pipe 28 and the first solenoid valve 30 and joins the refrigerant passing through the third pipe 22 to heat the outdoor heat exchanger 14. Having condensed and turned into a liquid phase, the refrigerant passes through the fourth pipe 24 and returns to the suction port of the compressor 6 via the four-way valve 8 and the accumulator 26.

Furthermore, part of the liquid refrigerant diverged from the second pipe 20 between the indoor heat exchanger 16 and the strainer 10 passes through the sixth pipe 38 and the second solenoid valve 42 and absorbs heat from the heat storage material 36 in the heat storage heat exchanger 34. The liquid refrigerant then evaporates and turns into a gas phase. The resultant gaseous refrigerant passes through the seventh pipe 40, joins the refrigerant passing through the fourth pipe 24, and returns to the suction port of the compressor 6 via the accumulator 26.

Although the refrigerant returning to the accumulator 26 contains the liquid refrigerant returning from the outdoor heat exchanger 14, the latter is admixed with the hot gaseous refrigerant returning from the heat storage heat exchanger 34 to thereby promote evaporation of the liquid refrigerant. Accordingly, the liquid refrigerant may not pass through the accumulator 26 or return to the compressor 6, thus making it possible to enhance the reliability of the compressor 6.

At the start of defrosting/heating operation, the temperature of the outdoor heat exchanger 14 is below the freezing point due to adhesion of frost, but when the outdoor heat exchanger 14 is heated by the gaseous refrigerant discharged from the discharge port of the compressor 6, frost melts around zero degree and the temperature of the outdoor heat exchanger 14 starts to increase again upon termination of melting of the frost. When the temperature sensor 44 detects such a temperature rise of the outdoor heat exchanger 14, it is determined that defrosting has been completed and the controller outputs a command to shift from defrosting/heating operation to normal heating operation.

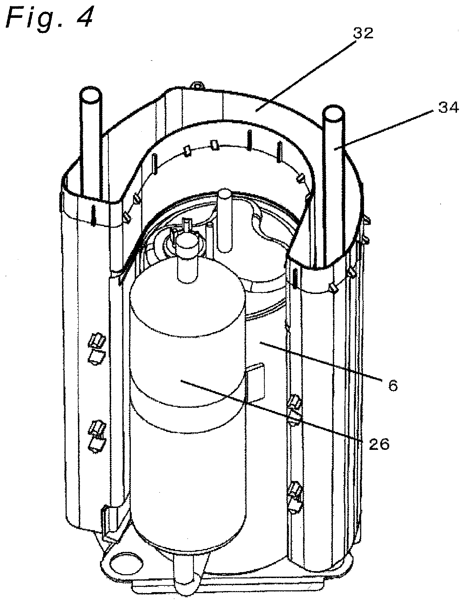

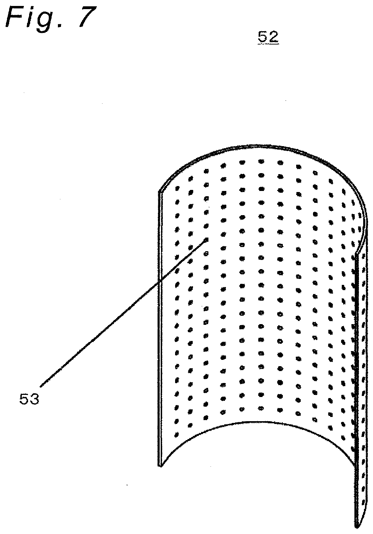

Fig. 4 is a perspective view of a state where the heat storage tank 32 is attached to the compressor 6. In Fig. 4, the compressor 6 is provided with the accumulator 26. The heat storage tank 32 is attached so as to circumscribe the compressor 6. A heat transfer sheet (see Fig. 7) 52 is interposed between the heat storage tank 32 and the compressor 6. The heat storage tank 32 accommodates the heat storage material (not shown) and the heat storage heat exchanger 34.

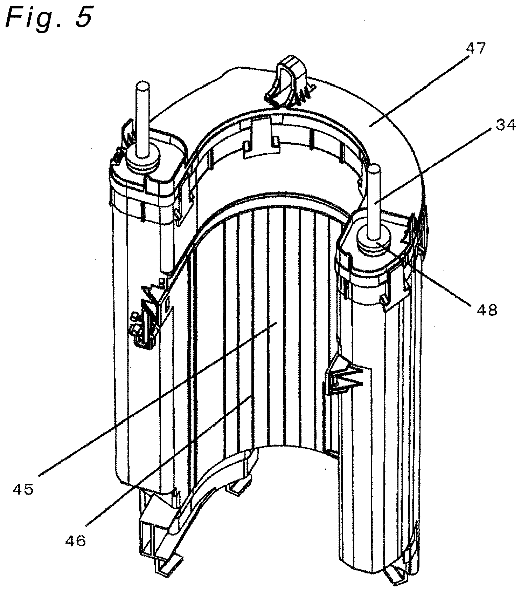

Fig. 5 is a perspective view of a state where the compressor 6 is detached from the heat storage tank 32. The heat storage tank 32 has a heat transfer portion 45 at a position in contact with the heat transfer sheet 52 attached to the compressor 6. The heat transfer portion 45 is provided with grooves 46 at constant pitches and discharges air left between the heat storage tank 32 and the heat transfer sheet 52 when the heat transfer sheet 52 is made in close contact with the heat storage tank 32. In this case, the heat transfer portion 45 is made thinner than the heat storage tank 32 other than the heat transfer portion 45, so as to secure strength of the heat storage tank 32 as well as to improve heat conductivity of the heat transfer portion 45.

Both the heat storage tank 32 and the heat transfer portion 45 are made of resin, thereby being easily processed at a low cost. Furthermore, even when these components are prepared separately, they can be easily integrated together by secondary processing.

The heat storage tank 32 is provided with a lid 47 so as to prevent the heat storage material accommodated therein from leaking outside, and a sealing member 48 is provided between the lid 47 and the heat storage heat exchanger 34.

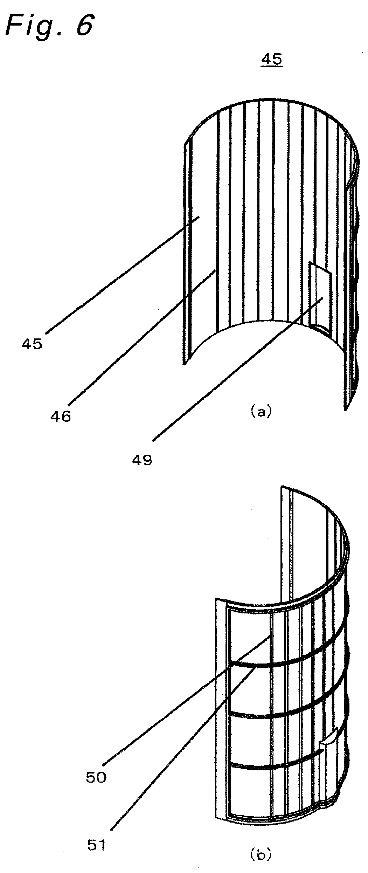

Figs. 6(a) and 6(b) are perspective views of the heat transfer portion 45. Fig. 6(a) depicts a surface in contact with the heat transfer sheet 52 attached to the compressor 6. Fig. 6(b) depicts a reverse surface facing the inner surface of the heat storage tank 32. The surface depicted in Fig. 6(a) is provided with the grooves 46 at constant pitches, as well as a recess 49 so as to receive a projection formed on the compressor 6. The surface depicted in Fig. 6(b) is provided with reinforcing portions 50 for compensating for reduced strength of the heat transfer portion 45 that is thinned by the depth of the grooves 46 provided in the surface depicted in Fig. 6(a). The surface depicted in Fig. 6(b) is also provided with reinforcing portions 51 transversely reinforcing the heat transfer portion 45 so as not to be damaged even if twisting force is applied to the heat transfer portion 45.

Fig. 7 depicts the heat transfer sheet 52 that is provided with through holes 53 used for releasing air between the compressor 6 and the heat transfer sheet 52 when being attached to the compressor 6. The through holes 53 are provided at transverse pitches equal to the pitches of the grooves 46 that are provided in the heat transfer portion 45.

The surface of the compressor 6 is provided with uneven portions or unsmooth portions generated by welding in the production process of the compressor 6. Accordingly, it is difficult to make the surface of the heat storage tank 32 in close contact with the surface of the compressor 6 facing each other. Therefore, in the present invention, interposed between the compressor 6 and the heat storage tank 32 is the heat transfer sheet 52 made of resin (of the silicon series, for example), which is adhesive, elastic, and excellent in the heat transfer property. The heat transfer sheet is 0.5 to 3 mm thick, which is an appropriate thickness for improving the adhesion property deteriorated by unevenness or unsmoothness of the surface of the compressor 6 or for improving mounting tolerance between the compressor 6 and the heat storage tank 32 (the heat transfer portion 45), while keeping the heat transfer property.

Described next is the behavior of the heat storage device configured as described above.

As described above, the heat storage tank 32 stores, in the heat storage material 36, heat generated by the compressor 6 during normal heating operation. Upon shifting from normal heating operation to defrosting/heating operation, part of the liquid refrigerant diverged from the second pipe 20 between the indoor heat exchanger 16 and the strainer 10 absorbs heat from the heat storage material 36 in the heat storage heat exchanger 34. The liquid refrigerant then evaporates and turns into a gas phase. Therefore, it is further preferred if the efficiency of absorbing heat generated by the compressor 6 is higher. The heat absorption efficiency is dependent on the degree of the adhesion property between the heat storage tank 32 and the compressor 6. Because the compressor 6 is a metal cylinder and has unevenness on the outer peripheral surface thereof, the adhesive heat transfer sheet 52 is interposed between the compressor 6 and the heat storage tank 32 so as to improve the degree of the adhesion property between the heat storage tank 32 and the compressor 6 and thereby to improve the heat absorption efficiency.

Heat stored in the heat storage tank 32 during normal heating operation is utilized for melting frost during defrosting/heating operation. Accordingly, the defrosting performance can be enhanced if the heat storage material 36 stores heat of a higher temperature during normal heating operation. More specifically, even with the same duration of normal heating operation and the same surface temperature of the compressor 6, the temperature of the heat storage material 36 is less likely to increase if heat is inefficiently transferred from the surface of the compressor 6 to the heat storage material 36 accommodated in the heat storage tank 32, while the temperature of the heat storage material 36 is more likely to increase if heat is efficiently transferred from the surface of the compressor 6 to the heat storage material 36. The heat transfer efficiency is dependent on the adhesion property between the heat storage tank 32 and the compressor 6. If excessive air is left therebetween, such air serves as a heat insulator to deteriorate the heat transfer efficiency.

In order to solve the above problem, in the present invention, interposed between the compressor 6 and the heat storage tank 32 is the heat transfer sheet 52 that has an appropriate thickness, adhesiveness, and elasticity, in order to improve the adhesion property thereby to enhance the heat transfer property.

When the heat transfer sheet 52 is attached to the compressor 6 and the heat storage tank 32 is then attached to the compressor 6, because of the adhesiveness of the heat transfer sheet 52, air may be left between the compressor 6 and the heat transfer sheet 52 as well as between the heat transfer sheet and the heat storage tank 32. In order to solve this problem, in the present invention, the through holes 53 are provided in the heat transfer sheet 52 so as to discharge air left between the compressor 6 and the heat transfer sheet 52, while the heat transfer portion 45 is provided to the heat storage tank 32 at the position in contact with the heat transfer sheet 52, so as to discharge air left between the heat transfer sheet 52 and the heat storage tank 32, and the heat transfer portion 45 is provided with the grooves 46 used for discharging air. Accordingly, because of the adhesiveness of the heat transfer sheet 52, the heat transfer sheet 52 can be made in close contact with the compressor 6. Furthermore, air left between the heat transfer sheet 52 and the compressor 6 at this stage can be discharged outside via the through holes 53. By subsequently attaching the heat storage tank 32 to the heat transfer sheet 52 in close contact with the compressor 6, the heat transfer sheet 52 can be made in close contact with the heat transfer portion 45 of the heat storage tank 32. Furthermore, air left between the heat transfer sheet 52 and the heat transfer portion 45 at this stage can be discharged outside along the grooves 46. In addition, after discharging air between the grooves 46 and the heat transfer sheet 52, gaps between the grooves 46 and the heat transfer sheet 52 can be filled due to elasticity of the heat transfer sheet 52, so as to further improve the adhesion property between the heat transfer sheet 52 and the heat transfer portion 45. As a result, heat of the compressor 6 can be efficiently transferred to the heat storage material accommodated in the heat storage tank 32.

The pitches of the grooves 46 need to be as small as possible so as to discharge air of a diameter as small as possible. To the contrary, the grooves 46 need to be provided at appropriate pitches so as not to inhibit transfer of heat from the compressor 6 to the heat storage tank 32 due to air left in a large number of grooves 46. In the present invention, the pitches are set in the range from 1 mm to 30 mm.

If the through holes 53 in the heat transfer sheet 52 are provided at the pitches equal to the pitches of the grooves 46 in the heat transfer portion 45, air discharged from the gaps between the compressor 6 and the heat transfer sheet 52 via the through holes 53 can be discharged outside naturally along the grooves 46 in the heat transfer portion 45 located on the outer periphery. In order to realize such discharge more reliably, it is further preferred that the grooves 46 in the heat transfer portion 45 and the through holes 53 in the heat transfer sheet 52 may be provided at the equal pitches so as to be located at the same positions, and the heat transfer sheet 52 and the heat transfer portion 45 may be located at the same position. In order to achieve such positional relationship, when attaching the heat transfer sheet 52 to the compressor 6, a mark may be provided so as to fix the attached position, and the positional relationship between the compressor 6 and the heat storage tank 32 may be determined definitively by a certain measure.

The heat transfer portion 45 may exert the higher heat transfer property if it is made of metal rather than resin, while resin is more suitable in view of processability such as flexibility in processed shape or accuracy in dimension. In particular, if using resin having excellent heat conductivity, it will be possible to achieve heat conductivity approximate to that of metal. Alternatively, the heat transfer portion 45 may be made of resin and be formed to be thinner than the other portions of the heat storage tank 32. The heat transfer property is improved in the thickness direction as the material is thinner, and it is thus possible to secure the heat transfer property in this manner.

As described earlier, heat stored in the heat storage material 36 that is accommodated in the heat storage tank 32 during normal heating operation is utilized for defrosting during defrosting/heating operation. In addition, such heat may be utilized as an auxiliary heat source upon restarting normal heating operation after defrosting/heating operation or after the equipment once stopped, so as to quickly start heating.

### INDUSTRIAL APPLICABILITY

The heat storage device according to the present invention relates to storing, in the heat storage material, waste heat generated by the compressor, and is useful in an air conditioner, a refrigerator, a water heater, a heat pump washing machine, and the like.

### DESCRIPTION OF REFERENCE SIGNS

2 outdoor unit, 4 indoor unit, 6 compressor, 8 four-way valve,
10 strainer, 12 expansion valve, 14 outdoor heat exchanger,
16 indoor heat exchanger, 18 first pipe, 20 second pipe,
22 third pipe, 24 fourth pipe, 26 accumulator,
28 fifth pipe, 30 first solenoid valve, 32 heat storage tank,
34 heat storage heat exchanger, 36 heat storage material, 38 sixth pipe,
40 seventh pipe, 42 second solenoid valve, 44 temperature sensor,
45 heat transfer portion, 46 groove, 47 lid, 48 sealing member,
50, 51 reinforcing portion, 52 heat transfer sheet, 53 through hole

## Claims

1. A heat storage device disposed to circumscribe a compressor (6), comprising:
a heat storage material (36) for storing heat generated by the compressor (6); a heat storage tank (32) accommodating the heat storage material (36); and
a heat transfer sheet (52) provided between the compressor (6) and the heat storage tank (32) so as to efficiently transfer waste heat of the compressor (6) to the heat storage tank (32); wherein the heat storage tank (32) is provided with a heat transfer portion (45) at a position in contact with the heat transfer sheet (52), **characterized in that** the heat transfer portion (45) is provided, on a surface in contact with the heat transfer sheet (52), with grooves (46) used for discharging air left between the heat transfer portion (45) and the heat transfer sheet (52).

2. The heat storage device according to claim 1, wherein on a reverse surface of the surface in contact with the heat transfer sheet (52), the heat transfer portion (45) is thicker at positions corresponding to the grooves (46) on the reverse side, rather than other positions.

3. The heat storage device according to claim 1 or 2, wherein the heat transfer sheet (52) is provided with through holes (53).

4. The heat storage device according to claim 3, wherein the grooves (46) in the heat transfer portion (45) are provided at constant pitches, and the through holes (53) in the heat transfer sheet (52) are provided at pitches equal to the pitches of the grooves (46).

5. The heat storage device according to any one of claims 1 to 4, wherein the heat transfer portion (45) is thinner than portions of the heat storage tank (32) other than the heat transfer portion (45).

6. The heat storage device according to any one of claims 1 to 5, wherein the heat transfer sheet (52) has adhesiveness and elasticity, so as to be in close contact with the compressor (6) as well as with the heat transfer portion (45) and to be shrunk when the heat storage tank (32) is pressed against the compressor (6).

7. The heat storage device according to any one of claims 1 to 6, wherein both the heat storage tank (32) and the heat transfer portion (45) are made of resin.

8. An air conditioner comprising the heat storage device according to any one of claims 1 to 7.

## Patentansprüche

1. Wärmespeichervorrichtung, die angeordnet ist, um einen Kompressor (6) zu umgeben, umfassend:
ein Wärmespeichermaterial (36) zum Speichern von Wärme, die von dem Kompressor (6) erzeugt wird;
einen Wärmespeicherbehälter (32), in dem das Wärmespeichermaterial (36) untergebracht ist; und
ein Wärmeübertragungsflächenelement (52), das zwischen dem Kompressor (6) und dem Wärmespeicherbehälter (32) vorgesehen ist, um Abwärme des Kompressors (6) wirksam an den Wärmespeicherbehälter (32) zu übertragen;
wobei der Wärmespeicherbehälter (32) mit einem Wärmeübertragungsabschnitt (45) in einer Position in Kontakt mit dem Wärmeübertragungsflächenelement (52) versehen ist, **dadurch gekennzeichnet, dass** der Wärmeübertragungsabschnitt (45) auf einer in Kontakt mit dem Wärmeübertragungsflächenelement (52) befindlichen Fläche mit Nuten (46) versehen ist, die zum Abführen von Luft verwendet werden, die zwischen dem Wärmeübertragungsabschnitt (45) und dem Wärmeübertragungsflächenelement (52) verblieben ist.

2. Wärmespeichervorrichtung nach Anspruch 1, wobei der Wärmeübertragungsabschnitt (45) auf einer entgegengesetzten Fläche der in Kontakt mit dem Wärmeübertragungsflächenelement (52) befindlichen Fläche an Stellen, die den Nuten (46) auf der entgegengesetzten Seite entsprechen, dicker als an anderen Stellen ist.

3. Wärmespeichervorrichtung nach Anspruch 1 oder 2, wobei das Wärmeübertragungsflächenelement (52) mit Durchgangslöchern (53) versehen ist.

4. Wärmespeichervorrichtung nach Anspruch 3, wobei die Nuten (46) in dem Wärmeübertragungsabschnitt (45) in konstanten Abständen vorgesehen sind und die Durchgangslöcher (53) in dem Wärmeübertragungsflächenelement (52) in Abständen vorgesehen sind, die gleich den Abständen der Nuten (46) sind.

5. Wärmespeichervorrichtung nach einem der Ansprüche 1 bis 4, wobei der Wärmeübertragungsabschnitt (45) dünner ist als Abschnitte des Wärmespeicherbehälters (32) abgesehen vom Wärmeübertragungsabschnitt (45).

6. Wärmespeichervorrichtung nach einem der Ansprüche 1 bis 5, wobei das Wärmeübertragungsflächenelement (52) Haftfähigkeit und Elastizität aufweist, um so in engem Kontakt mit dem Kompressor (6) sowie mit dem Wärmeübertragungsabschnitt (45) zu sein und um geschrumpft zu werden, wenn der Wärmespeicherbehälter (32) gegen den Kompressor (6) gepresst wird.

7. Wärmespeichervorrichtung nach einem der Ansprüche 1 bis 6, wobei sowohl der Wärmespeicherbehälter (32) als auch der Wärmeübertragungsabschnitt (45) aus Harz bestehen.

8. Klimaanlage, welche die Wärmespeichervorrichtung nach einem der Ansprüche 1 bis 7 umfasst.

## Revendications

1. Dispositif d'accumulation de chaleur, disposé pour circonscrire un compresseur (6), comprenant:
un matériau d'accumulation de chaleur (36) pour accumuler la chaleur produite par le compresseur (6);
un réservoir d'accumulation de chaleur (32) recevant le matériau d'accumulation de chaleur (36); et
une feuille de transfert de chaleur (52) disposée entre le compresseur (6) et le réservoir d'accumulation de chaleur (32) de façon à transférer efficacement la déperdition de chaleur du compresseur (6) vers le réservoir d'accumulation de chaleur (32);
dans lequel le réservoir d'accumulation de chaleur (32) comporte une partie de transfert de chaleur (45) à une position en contact avec la feuille de transfert de chaleur (52), **caractérisé en ce que** la partie de transfert de chaleur (45) est pourvue, sur une surface en contact avec la feuille de transfert de chaleur (52), de rainures (46) utilisées pour décharger l'air laissé entre la partie de transfert de chaleur (45) et la feuille de transfert de chaleur (52).

2. Dispositif d'accumulation de chaleur selon la revendication 1, dans lequel, sur une surface inverse de la surface en contact avec la feuille de transfert de chaleur (52), la partie de transfert de chaleur (45) est plus épaisse aux positions correspondant aux rainures (46) sur le côté inverse, plutôt qu'à d'autres positions.

3. Dispositif d'accumulation de chaleur selon la revendication 1 ou 2, dans lequel la feuille de transfert de chaleur (52) est pourvue de trous traversants (53).

4. Dispositif d'accumulation de chaleur selon la revendication 3, dans lequel les rainures (46) dans la partie de transfert de chaleur (45) sont fournies à des pas constants, et les trous traversants (53) dans la feuille de transfert de chaleur (52) sont fournis à des pas égaux aux pas des rainures (46).

5. Dispositif d'accumulation de chaleur selon l'une quelconque des revendications 1 à 4, dans lequel la partie de transfert de chaleur (45) est plus mince que les parties du réservoir d'accumulation de chaleur (32) autres que la partie de transfert de chaleur (45).

6. Dispositif d'accumulation de chaleur selon l'une quelconque des revendications 1 à 5, dans lequel la feuille de transfert de chaleur (52) possède une adhésivité et une élasticité, de façon à être en contact proche avec le compresseur (6) ainsi qu'avec la partie de transfert de chaleur (45) et de façon à être rétractée lorsque le réservoir d'accumulation de chaleur (32) est pressé contre le compresseur (6).

7. Dispositif d'accumulation de chaleur selon l'une quelconque des revendications 1 à 6, dans lequel tant le réservoir d'accumulation de chaleur (32) que la partie de transfert de chaleur (45) sont constituées de résine.

8. Climatiseur comprenant le dispositif d'accumulation de chaleur selon l'une quelconque des revendications 1 à 7.
